Europäisches Patentamt

European Patent Office

Office européen des brevets

(19)

(11) **EP 1 503 196 B1**

(12) **EUROPÄISCHE PATENTSCHRIFT**

(45) Veröffentlichungstag und Bekanntmachung des Hinweises auf die Patenterteilung:
**28.12.2005   Patentblatt 2005/52**

(51) Int Cl.⁷: **G01L 5/16**, G01L 3/14, B62D 5/04

(21) Anmeldenummer: **04019235.3**

(22) Anmeldetag: **14.04.2003**

(54) **Verfahren und Einrichtung zum Messen des Abtriebsdrehmoments eines Elektromotors mit einem diesem nachgeordneten Getriebe**

Method and apparatus to measure the drive torque of an electric motor and its gearbox

Procédé et installation pour la mesure du couple d'entrainement d'un moteur électrique avec une boîte de vitesse

(84) Benannte Vertragsstaaten:
**AT BE BG CH CY CZ DE DK EE ES FI FR GB GR HU IE IT LI LU MC NL PT SE SI SK TR**

(30) Priorität: **12.04.2002  DE 10217016**
**12.04.2002  DE 10217015**
**03.02.2003  DE 10304359**

(43) Veröffentlichungstag der Anmeldung:
**02.02.2005   Patentblatt 2005/05**

(62) Dokumentnummer(n) der früheren Anmeldung(en) nach Art. 76 EPÜ:
**03008566.6 / 1 353 159**

(73) Patentinhaber: **Deutsches Zentrum für Luft- und Raumfahrt e.V.**
**53175 Bonn (DE)**

(72) Erfinder:
• **Sporer, Norbert, Dipl.-Ing.**
**82407 Wielenbach (DE)**
• **Hähnle, Matthias, Dipl.-Ing.**
**80636 München (DE)**

(74) Vertreter: **von Kirschbaum, Albrecht**
**Waldstrasse 2b**
**82110 Germering (DE)**

(56) Entgegenhaltungen:
**EP-A- 0 575 634        DE-A- 4 208 522**
**US-A- 4 281 538        US-A- 5 010 970**
**US-A- 5 503 241        US-A- 5 672 834**
**US-B1- 6 230 555**

• **PATENT ABSTRACTS OF JAPAN Bd. 2000, Nr. 05, 14. September 2000 (2000-09-14) -& JP 2000 055752 A (KAYABA IND CO LTD), 25. Februar 2000 (2000-02-25)**

## Beschreibung

Die Erfindung betrifft ein Verfahren zum Bestimmen eines Abtriebsdrehmoments eines als Antrieb verwendeten Elektromotors mit einem diesem nachgeordneten Getriebe und Einrichtungen zum Durchführen des Verfahrens.

Ein beispielsweise zur korrekten Regelung eines Motors benötigtes, möglichst exaktes Drehmoment kann deshalb nur mit Hilfe eines zusätzlichen Sensors ermittelt bzw. gemessen werden. Zu diesem Zweck werden nach dem Stand der Technik als Drehmomentsensoren häufig sogenannte Drehmomentmesswellen in Abtriebsstränge eingebaut. Der Einbau solcher Drehmomentmesswellen in Abtriebssträngen ist nur in sehr aufwendiger Weise möglich und bedingt einen hohen Kostenaufwand und einen hohen Aufwand im Hinblick auf eine Schnittstellenanpassung, weil mehrere elektromechanische Komponenten meist unterschiedlicher Hersteller kombiniert werden müssen.

Die auf diese Weise erreichbare Performance ist durch die Anzahl Lagerungen und Dichtungen sowie durch die großen Massenträgheiten der vielen Bauteile stark beschränkt. Außerdem sind die einzelnen Komponenten nicht optimal aufeinander abgestimmt. Obendrein treten an den Drehmomentmesswellen Kräfte und Momente in insgesamt sechs Freiheitsgraden auf. Da jedoch nur das Abtriebsdrehmoment von Interesse ist, sind die Kräfte und die restlichen Momente fünf Störgrößen, die kompensiert werden müssen.

Auf Grund der einzugehenden Kompromisse in der Anpassung in die mechanischen und elektrischen Schnittstellen kann daher kein den vorgegebenen Anforderungen entsprechendes Antriebssystem erhalten werden. Neben dem hohen Aufwand bei der Konstruktion und im Hinblick auf eine Schnittstellenanpassung erfordert der Einbau von Drehmomentmesswellen beachtlichen zusätzlichen Bauraum.

In US 5,010,970 ist eine Servolenkung für ein Kraftfahrzeug beschrieben, welche eine von einer Lenksäule getragenen Gelenkspindel, ein Lenkrad und einen Elektromotor zum Unterstützen des Drehens des Lenkrads hat, wenn das Lenkmoment zu groß ist. Hierbei hat der Elektromotor eine gegenüber der Lenkspindel versetzte Abtriebswelle. Eine Servoanordnung enthält einen von einem Motor angetriebenes Teil und ist an der Lenkspindel vorgesehen, um selektiv ein Lenkdrehmoment, das von dem Lenkrad oder von der Motorabtriebswelle übertragen worden ist, an die Lenkspindel zu übertragen. Ein Drehmomentdetektor ist zwischen dem Lenkrad und der Lenkspindel angeordnet, um ein vorherbestimmtes, an dem Lenkrad aufgebrachtes Drehmoment zu detektieren, um so den Elektromotor in Gang zu setzen, wodurch ein Drehen des Lenkrades unterstützt wird.

Aufgabe der Erfindung ist es, einen Drehmomentsensor so in einer Motor-Getriebeeinheit unterzubringen, dass ein von irgendwelchen Störungen und sonstigen Einflüssen möglichst wenig beeinträchtigter, das Abtriebsdrehmoment möglichst genau wiedergebender Messwert hoher Güte erhalten wird.

Gemäß der Erfindung ist diese Aufgabe bei einem Verfahren zum Bestimmen eines Abtriebsdrehmoments eines Elektromotors mit nachgeordnetem Getriebe durch die Merkmale des Anspruchs 1 sowie bei einer Einrichtung zur Durchführung des Verfahrens durch die Merkmale des Anspruchs 2 gelöst. Ferner sind bei der Einrichtung zum Durchführen des Verfahrens verwendbare Drehmomentsensoren angegeben. Zusätzlich zum Abtriebsdrehmoment $M_{Abtrieb}$ wird gemäß der Erfindung ein dynamisches Motordrehmoment $M_{Störmoment}$ mittels eines der erfindungsgemäßen Drehmomentsensoren gemessen, welcher mit einem Hohlrad des Getriebes beispielsweise in Form eines Harmonic-Drive-Getriebes oder eines Planetengetriebes ortsfest abgestützt ist und somit direkt mit dem Getriebe-Hohlrad verbunden ist. Gemäß einer vorteilhaften Weiterbildung der Erfindung können das Getriebe-Hohlrad und der Drehmomentsensor einteilig ausgeführt sein.

Durch die Erfindung ist somit erreicht, dass statische Drehmomente nicht am Drehmomentsensor gemessen werden, da in den statischen Motordrehmomenten auch das Reibmoment der Motorwellenlagerung enthalten ist, welche nicht exakt berechenbar und somit auch nicht rechnerisch kompensiert werden kann. Obendrein ist bei geradverzahnten Hohlrädern, wie sie in Harmonic-Drive-Getrieben vorgesehen sind, aufgrund dieser Verzahnung die Übertragung von Axialkräften und Biegemomenten formschlüssig nicht möglich, so dass daraus resultierende Störungen auch nicht auf den Drehmomentsensor übertragen werden können.

Da gemäß der Erfindung die ortsfeste Abstützung über ein ortsfestes Gehäuse erfolgt, stützt sich das Hohlrad des Getriebes an diesem ortsfesten Gehäuse ab, so dass Kraftfluß von der Motorwelle über das Getriebe zum Motorgehäuse erfolgt und somit nicht über den Drehmomentsensor geht. Dadurch sind alle statischen Motordrehmomente ausgeschaltet und sind nicht mehr in den aufgenommenen Sensorsignalen enthalten. Bei der erfindungsgemäßen Lösung kommt es jedoch zu einem anderen Effekt. Wenn der Motor anläuft und somit eine Drehzahländerung stattfindet, gibt es am Motorgehäuse außen eine Art "Ruck", der durch die Trägheit der Motorwelle hervorgerufen wird, und welcher vom Drehmomentsensor erfasst wird.

Obwohl gemäß der Erfindung keine statischen Motordrehmomente, sondern die Motordrehmomente gemessen werden, sind diese durch dynamische Motordrehmomente $M_{Störmoment}$ verfälscht. Allerdings lassen sich diese Störsignale rechnerisch kompensieren, weil sie nur von Drehzahländerungen der Motorwelle abhängig sind. Diese Drehzahländerungen können jedoch wiederum durch einen standardmäßig vorgesehenen Encoder genau erfasst und daraus die störenden dynamischen Motordrehmomente berechnet werden, so dass durch Subtraktion dieser störenden dynamischen Motordrehmomente von den mittels des Drehmomentsensors gemessenen Motordrehmomenten ein genaues Messergebnis erhalten wird. Die dynamischen Motordrehmomente sind bei einem gemäß der Erfindung in das Hohlrad integrierten Sensor und bei einer kurzen und damit trägheitsarmen Motorwelle klein und nur von kurzer Dauer. Daher sind die störenden Motordrehmomente gut berechenbar, so dass eine entsprechende rechnerische Korrektur des vom Drehmomentsensor gemessenen Signals zu sehr exakten Meßergebnissen führt.

Liegen größere Drehzahländerungen in kurzen Zeitintervallen vor, wird von dem integrierten Sensor das störende dynamische Motordrehmoment $M_{Störmoment}$ mit gemessen, das wie vorstehend ausgeführt, als "Ruck" wahrnehmbar ist. Das störende dynamische Motordrehmoment $M_{Störmoment}$ kann gemäß den nachstehend wiedergegebenen Formeln berechnet werden und als Korrekturwert von dem mittels des Drehmomentsensors gemessenen Drehmomentwert $M_{Sensor}$ subtrahiert werden.

$$\frac{\Delta n_{Motorwelle}}{\Delta t} = \dot{\omega}_{Motorwelle} = \frac{M_{Störmoment}}{J_{Motorwelle}}$$

$$M_{Störmement} = J_{Motorwelle} \cdot \dot{\omega}_{Motorwelle} = J_{Motorwelle} \cdot \frac{\Delta n_{Motorwelle}}{\Delta t}$$

Für das Abtriebsdrehmoment $M_{Abtrieb}$ ergibt sich somit:

$$M_{Abtrieb} = M_{Sensor} - M_{Störmoment}$$

Hierbei sind mit $\Delta n$ eine Drehzahländerung, mit $\Delta t$ ein Zeitintervall, mit $\dot{\omega}$ eine Drehzahländerung der Motorwelle sowie mit J die rotatorische Massenträgheit der Motorwelle bezeichnet.

Die gemäß der Erfindung vorgesehenen Drehmomentsensoren mit einer scheibenförmigen Bauform haben eine erheblich geringere Bauhöhe als aus dem Stand der Technik bekannte Drehmomentsensoren. Ferner ist bei der Erfindung sowohl der integrierte Drehmomentsensor als auch das Getriebe und der Motor von einem ortsfest angeordneten Gehäuse umgeben, so dass die vorstehend angeführten wichtigen Bauelemente nicht nur vor Umwelteinflüssen jeglicher Art sondern auch vor Schmutz u.ä. sowie vor elektromagnetischer Strahlung geschützt sind.

Gemäß der Erfindung werden somit einem Abtriebsdrehmoment exakt entsprechende Messsignale erhalten, durch welche bei Einbringen in eine Regelung des Motor-Drehmoments dessen Präzision ganz wesentlich verbessert wird. Hierbei ist die Einbaulage des Drehmomentsensors beispielsweise in eine Servoantriebseinheit von großer Bedeutung hinsichtlich der Güte des Signals.

Bei gemäß der Erfindung möglichen Einbaulagen können die Leitungen zum Übertragen von mittels eines Drehmomentsensors gemessenen Signalen auf der Motorseite geführt werden, so dass ein Sensorbetrieb mit Multi-Turn realisiert ist.

Da die gemäß der Erfindung vorgesehenen, integrierbaren Drehmomentsensor-Ausführungsformen eine sehr kompakte Bauform haben, wird bei entsprechender Integration des jeweiligen Drehmomentsensors in eine Antriebs-Getriebeeinheit das Massenträgheitsmoment nicht erhöht oder anders ausgedrückt, es ist nicht größer als bei einer entsprechenden Antriebseinheit, bei der kein Drehmomentsensor integriert ist. Darüber hinaus ist durch das Integrieren eines Drehmomentsensors in eine Antriebseinheit für den Anwender eine einfach zu handhabende Drehmoment-Schnittstelle geschaffen und vorgegeben.

Nachfolgend wird die Erfindung anhand der Zeichnungen im einzelnen erläutert. Es zeigen:

Fig.1            in schematischer Darstellung eine Ausführungsform einer Motor-Getriebeeinheit mit integriertem Drehmomentsensor,

Fig.2            in schematischen Prinzipdarstellung eine Ausführungsform einer Motor-Getriebeeinheit, bei welcher ein Drehmomentsensor im Hohlrad eines Harmonic-Drive-Getriebes integriert ist;

Fig.3a und 3b    in perspektivischer Darstellung eine erste Ausführungsform eines Drehmomentsensors mit vier Verbindungsstegen, und zwar in Fig.3a dessen Vorderseite und in Fig.3b dessen Rückseite;

Fig.4            eine stark vergrößerte Wiedergabe einer in einem Verbindungssteg vorgesehenen Ausnehmung;

Fig.5            in perspektivischer Darstellung eine Schnittansicht entlang des Verbindungsstegs einer Linie III-III in Fig.4;

Fig.6a und 6b    eine zweite Ausführungsform eines Drehmomentsensors mit vier Verbindungsstegen, und zwar in Fig.6a eine Draufsicht auf dessen Vorderseite und in Fig.6b eine der Fig.3b entsprechende perspektivische Darstellung dessen Rückseite;

Fig.7a    eine vergrößerte Darstellung eines in einem Verbindungssteg ausgebildeten Ausschnitts, und

Fig.7b    in stark vergrößerter Darstellung eine Variante eines Ausschnitts in einem Verbindungssteg.

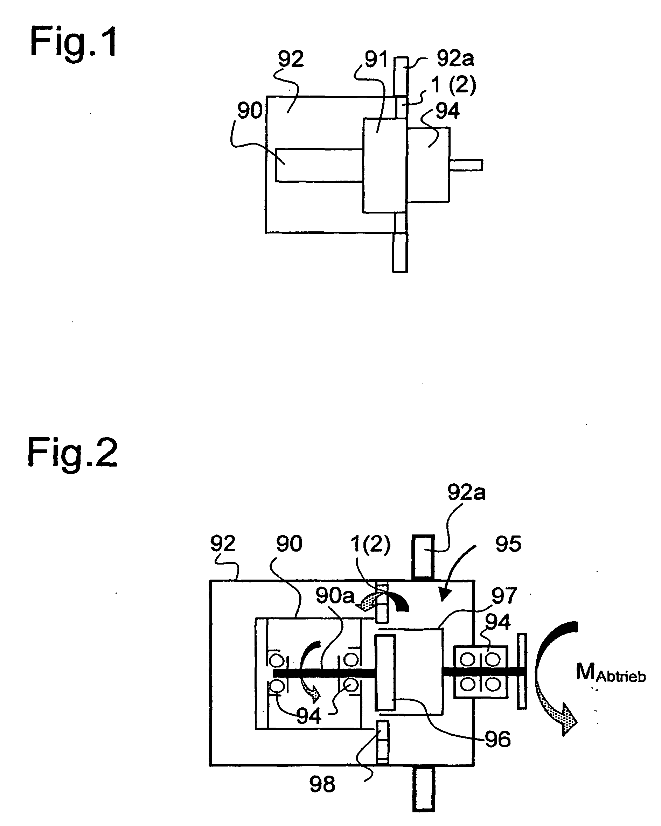

In Fig.1 ist eine Einheit aus einem Motor 90 und einem Getriebe 91 in einem ortsfesten Gehäuse 92 untergebracht, das über ein schematisch angedeutetes Gehäuseteil 92a abgestützt ist. Ein Drehmomentsensor 1 oder 2 ist zwischen dem ortsfesten Gehäuse 92 und dem Getriebe 91 bzw. dem Hohlrad des Getriebes 91 vorgesehen. Darüber hinaus ist in Fig.1 schematisch eine Lagerung 94 angedeutet.

Gemäß der Erfindung misst der zwischen dem Gehäuse 92 und dem Getriebe 91 untergebrachte Sensor ein Abtriebsdrehmoment und zusätzlich ein störendes dynamisches Motordrehmoment, das bei einer Drehzahländerung auftritt und zu einem "Ruck" des Motorgehäuses führt. Von einem auf die vorstehend beschriebene Weise untergebrachten Drehmomentsensor 1 oder 2 werden keine statischen Motordrehmomente und somit wird auch nicht das Reibmoment der Motorwellenlagerung gemessen, welche nicht berechenbar und somit auch nicht kompensierbar ist.

In Fig.2 ist der wesentliche Teil einer weiteren Ausführungsform gemäß der Erfindung dargestellt. Hierbei ist eine in zwei Lagern 94 gelagerte Welle 90a des Motors 90 mit dem Harmonic-Drive-Wave-Generator 96 eines in seiner Gesamtheit mit 95 bezeichneten Harmonic-Drive-Getriebes verbunden. Die Flexspline 97 des Harmonic-Drive-Getriebes 95 ist über in dem äußeren Gehäuse 10a vorgesehene Lager 94 gelagert. Zwischen dem Hohlrad 98 des Harmonic-Drive-Getriebes 95 und dem ortsfesten Gehäuse 92 ist einer der Drehmomentsensoren 1 oder 2 vorgesehen. Hierbei können der Drehmomentsensor 1 oder 2 und das Hohlrad 98 des Harmonic-Drive-Getriebes 95 auch einteilig ausgebildet sein.

Bei beiden in Fig.1 und 2 dargestellten Ausführungsformen ist besonders vorteilhaft, dass, wie im einzelnen nicht näher dargestellt ist, am Drehmomentsensor 1 oder 2 vorgesehene Leitungen, um mittels eines Drehmomentsensors gemessene Signale zu übertragen, neben allen Kabeln, über welche der Motor mit Energie versorgt wird, auf der Motorseite geführt sind.

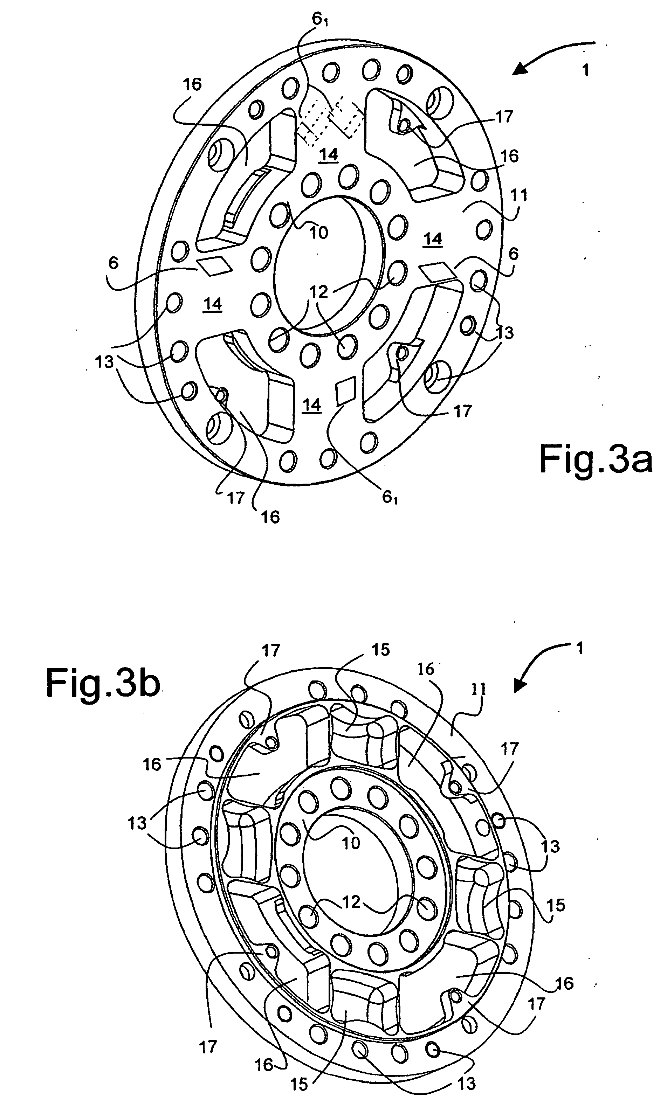

In Fig.3a und 3b sind jeweils in perspektivischer Darstellung Vorderseite und Rückseite einer ersten Ausführungsform eines Drehmomentsensors dargestellt, welcher als ein monolithisches, scheibenförmiges Aufnahmeteil 1 ausgebildet ist, dessen Oberseite eine in zusammenhängende Abschnitte unterteilte, plane Fläche ist.

Das Aufnahmeteil 1 besteht aus einem Innenflansch 10 mit einer Anzahl ersten Krafteinleitungsstellen 12, einem Außenflansch 11 mit einer im allgemeinen größeren Anzahl von zweiten Krafteinleitungsstellen 13 und aus vier zwischen den beiden Flanschen 10 und 11 ausgebildeten, radial verlaufenden Verbindungsstegen 14 mit mechanisch geschwächten Abschnitten in Form von unterseitigen Ausnehmungen 15.

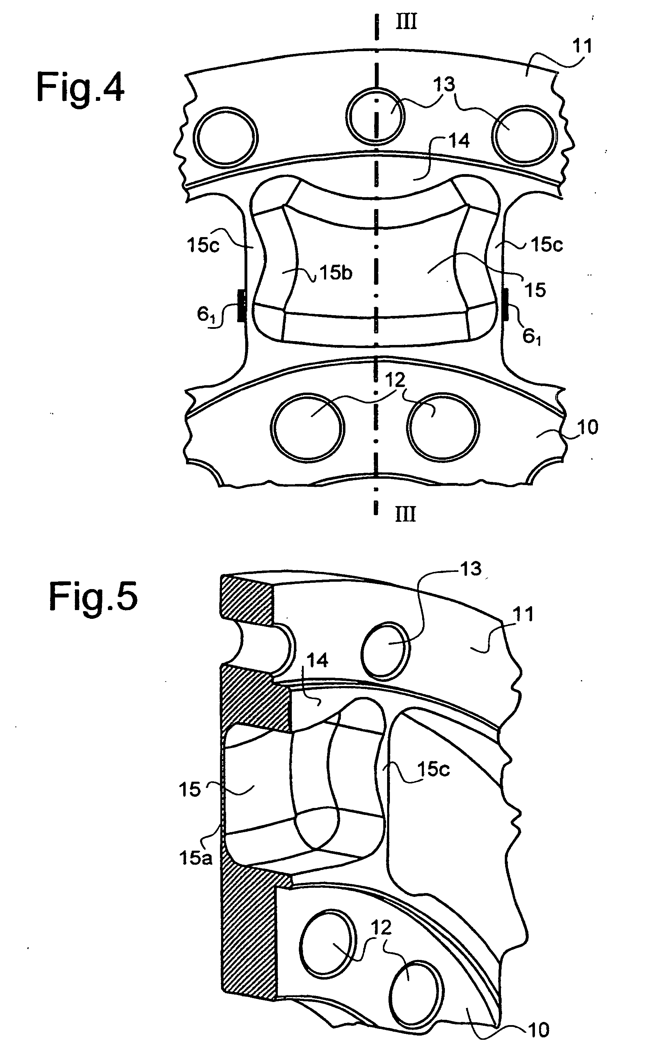

Die unterseitigen Ausnehmungen 15 sind jeweils, wie der perspektivischen Darstellung der Rückseite in Fig. 3b bzw. der Schnittansicht in Fig.5 sowie der Darstellung in Fig.4 zu entnehmen ist, dahingehend optimiert, dass sie vorzugsweise nierenförmig ausgebildet sind und durch einen dünnen membranartigen Abschluss 15a (Fig.5) bezüglich der Oberseite abgeschlossen sind. Hierbei ist die Oberseite des membranartigen Abschlusses 15a (Fig.5) und damit der Ausnehmung eine plane Fläche, auf der Messwertaufnehmer, beispielsweise Dehnungsmeßstreifen $6_1$ (Fig.3a) aufgebracht sind.

Wie der Schnittansicht in Fig.5 zu entnehmen ist, haben die jeweils durch eine Ausnehmung 15 geschwächten Abschnitte der Verbindungsstege 14 einen im wesentlichen u-förmigen Querschnitt. Ferner ist der Übergang von der flächigen Unterseite des membranartigen Abschlusses 15a der jeweiligen Ausnehmung 15 in zur Ausnehmungsunterseite etwa senkrecht verlaufende Wandungsbereiche 15c als eine umlaufende Rundung bzw. Auskehlung 15b ausgebildet. Hierdurch ergibt sich eine geringere Materialbelastung in diesem Bereich und obendrein ein gleichmäßiger Spannungsverlauf, was sich wiederum in sehr vorteilhafter Weise auf die Lebensdauer eines Drehmomentsensors auswirkt.

Wie ebenfalls insbesondere den vergrößerten Darstellungen der Fig.4 und 5 zu entnehmen ist, weisen die etwa in radialer Richtung verlaufenden Wandungsbereiche 15c der einzelnen Verbindungsstege 14 unterschiedliche Wandstärken und somit elastische und weniger elastische, steifere Bereiche auf.

Hierbei befinden sich in Fig.4 und 5 die Wandbereichen mit geringer Wandstärke entsprechenden elastischen Bereiche in den Übergängen von den in radialer Richtung verlaufenden Abschnitten zu entlang des Innenflansches 10 und des Außenflansches 11 verlaufenden Abschnitten der Wandungsbereiche 15, während sich etwa im mittleren Teil der Wandungsbereiche 15c und damit zwischen den elastischen Bereichen Abschnitte mit einer größeren Wandstärke und somit die steiferen Bereiche befinden.

Der membranartige Abschluß 15a ist somit von Stegen (Wandungsbereichen) mit unterschiedlichen Wandstärken und dadurch mit elastischen und weniger elastischen Bereichen umgeben, weshalb vorstehend auch von einer nierenförmigen Ausnehmung gesprochen ist. Bezüglich des membranartigen Abschlusses 15a hat dies darüber hinaus zur Folge, dass dieser bei einer Drehmomentbelastung nachgiebig ist, während er bei einer Axial- oder Kippbelastung aufgrund eines Kippmoments steif ist. Ferner treten hohe Spannungen bzw. Dehnungen in dem membranartigen Abschluss 15a somit ausschließlich nur bei den zu messenden Drehmomenten auf.

Wie der Darstellung in Fig.3a zu entnehmen ist, können für den Fall, dass das monolithische Aufnahmeteil 1 eines Drehmomentsensors nur einen Verbindungssteg 14 hat, auf dem einzigen Verbindungssteg zwei unter 45° ausgerichtete, gestrichelt dargestellte Dehnungsmessstreifen $6_1$ aufgebracht werden.

Um jedoch die Auswertung der Messergebnisse zu verbessern und zu erleichtern, sind Dehnungsmessstreifen $6_1$ spiegelbildlich auf jeweils zwei diagonal einander gegenüberliegenden Verbindungsstegen 14 ebenfalls wieder unter 45° zu einer fiktiven, radial verlaufenden Mittenlinie des jeweiligen Verbindungsstegs 14 aufgebracht.

Wie insbesondere der vergrößerten Darstellung in Fig.4 zu entnehmen ist, sind die senkrecht zur Oberfläche des Aufnahmeteils 1 ausgerichteten, etwa in radialer Richtung verlaufenden Außenflächen der Wandungsbereiche 15c der Verbindungsstege als plane Flächen ausgebildet. Damit sind auf den beiden planen Außenflächen jedes der Verbindungsstege 14 etwa planparallele Applikationsflächen zum Aufbringen von weiteren Dehnungsmeßstreifen geschaffen. Somit sind in jedem Verbindungssteg 14 zwei Meßspeichen mit veränderlichem Querschnitt mit jeweils einer planen äußeren Applikationsfläche zum Aufbringen von Dehnungsmeßstreifen ausgebildet.

In der in Fig.3b dargestellten Ausführungsform sind an zwischen benachbarten Verbindungsstegen 14 vorgesehenen Ausschnitten 16 Ansätze 17 ausgebildet, welche etwa in der Mitte des jeweiligen Ausschnitts 16 von der Innenseite des Außenflansches 11 nach innen vorstehen. Auf derartigen Ansätzen 17 kann elektronische Hardware, beispielsweise in Form eines A-nalogverstärkers zum Verstärken der ermittelten Messwerte und ein dem Verstärker nachgeordneter Analog-Digital-Wandler sowie die eigentliche Auswerteelektronik unmittelbar auf/an dem monolithischen Aufnahmeteil 1 des Drehmomentsensors angebracht werden.

Dadurch sind zum einen die eingangs erwähnten Signalstörungen minimiert bzw. weitgehend ausgeschaltet und zum anderen wird bei dieser Ausbildung eines Drehmomentsensors für die zur Auswertung benötigte Hardware kein zusätzlicher Bauraum benötigt.

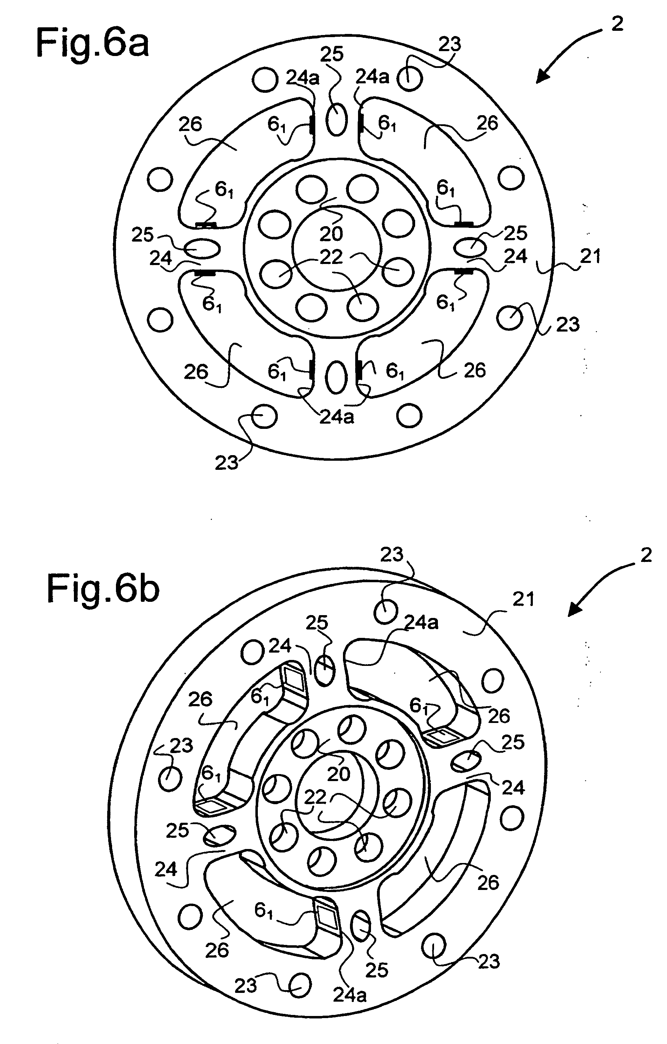

Auch bei der zweiten in Fig.6a, 6b dargestellten Ausführungsform ist der Drehmomentsensor wieder als ein monolithisches scheibenförmiges Aufnahmeteil 2 mit planer Oberseite ausgebildet. Ferner besteht das Aufnahmeteil 2 wiederum aus einem kreisringförmigen Innenflansch 20 mit ersten Krafteinleitungsstellen 22, aus einem kreisringförmigen Außenflansch 21 mit zweiten Krafteinleitungsstellen 23 und aus vier zwischen den beiden Flanschen ausgebildeten, radialverlaufenden Verbindungsstegen 24.

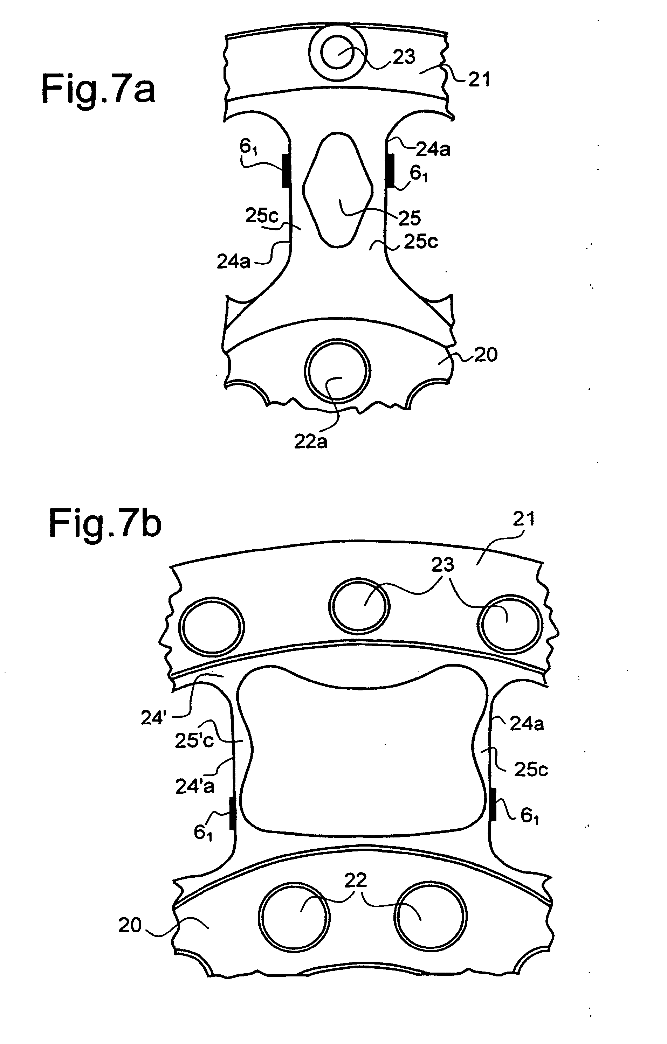

Bei der zweiten Ausführungsform sind jedoch im Unterschied zur ersten Ausführungsform in den vier Verbindungsstegen 24 die mechanisch geschwächten Abschnitte als von der Ober- zur Unterseite der Verbindungsstege 24 durchgehende Ausschnitte 25 ausgebildet. Diese Ausschnitte können, wie in Fig.6a und 6b dargestellt, die Form einer Ellipse und in Fig.7a die Form einer Raute haben oder sind, wie in Fig.7b dargestellt, nierenförmig ausgebildet.

Wie den Fig.6a bis 6b zu entnehmen ist, sind die senkrecht zur Oberfläche des Aufnahmeteils 2 ausgerichteten, in radialer Richtung verlaufenden Außenflächen 24a (Fig.7a) und 24'a (Fig.7b) der jeweiligen Verbindungsstege 24 bzw. 24' als plane Flächen ausgebildet, auf welchen entsprechend ausgerichtete Messwertaufnehmer $6_1$ aufgebracht sind. Wie bereits in Verbindung mit Fig.4 und 5 ausgeführt, haben die etwa radial ausgerichteten Wandungsbereiche 25c bzw. 25'c der jeweiligen Ausschnitte 25 und 25' der Verbindungsstege 24 bzw. 24' einen veränderlichen Querschnitt, wobei sich wiederum elastische und weniger elastische und damit steifere Bereiche abwechseln.

Hierbei befinden sich bei den Ausschnitten 25 in Fig.6a, 6b und Fig.7a die elastischen Bereiche etwa im mittleren Bereich der in zwei Messspeichen aufgeteilten Verbindungsstege 24 bzw. 24a, während sich die weniger elastischen und damit steiferen Bereiche in den Übergängen von den Verbindungsstegen 24 bzw. 24' zu dem Innenflansch 20 bzw. dem Außenflansch 21 befinden.

Die Ausführung in Fig.7b entspricht bezüglich der unterschiedlichen Wandstärken und damit der elastischen und weniger elastischen Bereiche der vorstehend ausführlich beschriebenen Ausführungsform in Fig.4. Der einzige Unterschied besteht darin, dass es sich in Fig.7b um einen von der Oberzur Unterseite des Aufnahmeteils durchgehenden Ausschnitt 25' handelt, während in Fig.4 eine Ausnehmung 15 mit einem dünnen membranartigen Abschluss 15a vorgesehen ist.

Gemeinsam ist den Ausführungsformen in Fig.6a bis 7b, dass die Applikationsflächen in sich plan und jeweils an den Außenseiten der Verbindungsstege 24, 24' zwei als planparallele Flächen zum Aufbringen von Dehnungsmeßstreifen $6_1$ ausgebildet sind. In allen drei Ausführungsformen ist der unter den Applikationsflächen befindliche belastbare Querschnitt der beiden Meßspeichen jedes Verbindungsstegs 24 bzw. 24' veränderlich.

Aufgrund des nicht konstanten Querschnitts der beiden in jedem Verbindungssteg ausgebildeten Meßspeichen ergibt sich bei einer Belastung eine günstigere Biegung bzw. eine vorteilhafte Biegelinie, so dass auch in diesem Fall die Platzierung der Dehnungsmeßstreifen nicht mehr ganz so exakt wie bei den bisher bekannt gewordenen Ausführungsformen vorgenommen sein muss, und damit das Aufbringen der Dehnungsmeßstreifen schneller und damit kostengünstiger erfolgen kann. Ferner ist eine Fehlplatzierung kaum möglich, so dass auch dadurch eine höhere Zu-

EP 1 503 196 B1

verlässigkeit hinsichtlich der Funktionsweise gegeben ist. Da es sich bei den beiden Außenflächen der in jedem Verbindungssteg 24, 24' ausgebildeten beiden Meßspeichen jeweils um eine plane Applikationsfläche handelt und obendrein die beiden Applikationsflächen im wesentlichen planparallel verlaufen, können bei der Applikation der Dehnungsmeßstreifen, um den erforderlichen Anpressdruck aufzubringen, beispielsweise einfache Schraubzwingen zum Einsatz kommen.

Bezugszeichenliste

| 1 | Aufnahmeteil |
|---|---|
| 10 | Innenflansch |
| 11 | Außenflansch |
| 12 | Krafteinleitungsstellen von 10 |
| 13 | Krafteinleitungsstellen von 11 |
| 14 | Verbindungsstege |
| 14a | Außenflächenbereiche in 14 |
| 15 | Ausnehmungen |
| 15a | membranartiger Abschluß von 15 |
| 15b | umlaufende Rundung |
| 15c | Wandungsbereiche |
| 16 | Ausschnitte |
| 17 | Ansätze |
| 2 | Aufnahmeteil |
| 20 | Innenflansch |
| 21 | Außenflansch |
| 22 | Krafteinleitungsstellen 20 |
| 23 | Krafteinleitungsstellen 21 |
| 24, 24' | Verbindungsstege |
| 24a, 24'a | Außenflächenbereiche von 24, 24' |
| 25, 25' | Ausschnitt in 24, 24' |
| 25, 25c | Wandungsbereiche |
| 26 | Ausschnitte zwischen 24, 24' |
| 28 | Balken |
| $6, 6_1$ | Dehnungsmeßstreifen |
| 90 | Motor |
| 91 | Getriebe |
| 92 | Gehäuse |
| 92a | Gehäuseteil |
| 94 | Lager |
| 95 | Harmonic-Drive-Getriebe |
| 96 | Wave-Generator |
| 98 | Hohlrad |

**Patentansprüche**

1. Verfahren zum Bestimmen eines Abtriebsdrehmoments eines als Antrieb verwendeten Elektromotors mit einem diesen nachgeordneten Getriebe (91) mit Hohlrad, wobei mittels eines Drehmomentsensors zur Messung eines Motordrehmoments ($M_{Sensor}$), (1; 2), welcher mit dem Hohlrad des Getriebes (91) ortsfest abgestützt ist, zusätzlich zu einem Abtriebsdrehmoment ($M_{Abtrieb}$) ein dynamisches Motordrehmoment ($M_{Störmoment}$) gemessen wird und von dem mittels des Drehmomentsensors (1; 2) gemessenen Motordrehmoments ($M_{Sensor}$) das dynamische Motordrehmoment ($M_{Störmoment}$) subtrahiert wird, das von genau bestimmbaren Drehzahländerungen der Motorwelle abhängig ist, so dass sich das Abtriebsdrehmoment ($M_{Abtrieb}$) ergibt als:

$$M_{Abtrieb} = M_{Sensor} - M_{Störmoment} \cdot$$

2. Einrichtung zum Durchführen des Verfahrens nach Anspruch 1, wobei die Einrichtung enthält:

ein Getriebe (95) mit Hohlrad (98), das einem als Antrieb verwendeten Elektromotor (90), der eine Motorwelle (90a) enthält, nachgeordnet ist,
einen Drehmomentsensor (1; 2), der mit dem Hohlrad (98) des Getriebes (95) an einem um Motor (90) und Getriebe (95) vorgesehenen, ortsfesten Gehäuse (92) abgestützt ist, ein Encoder zum Bestimmen von Drehzahländerungen des Motors (90) sowie ein Subtrahierglied, und wobei an der Motorwelle (90a) der Encoder sowie das Subtrahierglied vorgesehen sind, in welchem zum Bestimmen des Abtriebsdrehmoments ($M_{Abtrieb}$) von einem mittels des Drehmomentsensors (1; 2) gemessenen Motordrehmoments ($M_{sensor}$) das exakt berechenbare dynamische Motordrehmoment ($M_{Störmoment}$) subtrahiert wird.

3. Einrichtung nach Anspruch 2, wobei der Drehmomentsensor (1; 2) eine Einheit mit dem Hohlrad (98) eines Harmonic-Drive-Getriebes (95) oder eines Planetengetriebes bildet.

4. Einrichtung nach Anspruch 2, wobei Leitungen zum Übertragen von mittels des Drehmomentsensors (1; 2) gemessenen Signalen auf der Motorseite geführt sind.

5. Einrichtung nach den Ansprüchen 2 bis 4 mit einem verwendbaren Drehmomentsensor in Form eines monolithischen scheibenförmigen Aufnahmeteils (1), bestehend aus einem kreisringförmigen Innenflansch (10) mit ersten Krafteinleitungsstellen (12), aus einem kreisringförmigen Außenflansch (11) mit zweiten Krafteinleitungsstellen (13) und aus zwischen den beiden Flanschen (10, 11) ausgebildeten, radial verlaufenden Verbindungsstegen (14) jeweils mit mechanisch geschwächtem Abschnitt, an welchem druck- oder dehnungsempfindliche, elektrische Ausgangssignale generierende Messwertaufnehmer (6) vorgesehen sind, die nach dem Prinzip einer Wheatstone-Brücke jeweils zu Viertel-, Halb- oder Voll-Brücken in der Weise geschaltet sind, dass ein Drehmoment ermittelbar ist, wobei das Aufnahmeteil (1) eine zusammenhängende, gegliederte, plane Oberseite aufweist, und die mechanisch geschwächten Abschnitte der Verbindungsstege (14) als unterseitige Ausnehmungen (15) mit jeweils einem dünnen membranartigen Abschluss (15a) ausgebildet sind, wobei auf der planen flächigen Oberseite der membranartigen Abschlüsse (15a) Messwertaufnehmer (6) aufgebracht sind.

6. Drehmomentsensor nach Anspruch 5, wobei die mechanisch geschwächten Abschnitte der Verbindungsstege (14) einen im wesentlichen u-förmigen Querschnitt haben.

7. Drehmomentsensor nach Ansprüche 5 oder 6, wobei der Übergang von der flächigen Unterseite des membranartigen Abschlusses (15a) jeder Ausnehmung (15) in zur flächigen Unterseite etwa senkrecht ausgerichtete Wandungsbereiche (15c) als eine umlaufende Rundung (Auskehlung) (15b) ausgebildet ist.

8. Drehmomentsensor nach Anspruch 7, wobei die etwa in radialer Richtung verlaufenden, stegförmigen, seitlichen Wandungsbereiche (15c) der Verbindungsstege (14) unterschiedliche Wandungsstärken und somit elastische und weniger elastische, steifere Bereiche aufweisen.

9. Drehmomentsensor nach Anspruch 8, wobei sich die Wandungsbereichen mit geringer Wandstärke entsprechenden, elastischen Bereiche in den Übergängen von den in radialer Richtung verlaufenden Abschnitten zu entlang den Flanschen (10, 11) verlaufenden Abschnitten der Wandungsbereiche (15c) befinden und dazwischen die Wandungsbereichen mit größerer Wandstärke entsprechenden, weniger elastischen und somit steiferen Bereiche liegen.

10. Drehmomentsensor nach einem der Ansprüche 5 bis 9, wobei die senkrecht zur Oberfläche der Aufnahmeteils (1) ausgerichteten, in radialer Richtung verlaufenden Außenflächen der Verbindungsstege (14) als plane Flächen ausgebildet sind, auf welche Messwertgeber ($6_1$) aufgebracht sind.

11. Drehmomentsensor nach einem der Ansprüche 5 bis 10, wobei in Ausschnitten (16) zwischen zwei Verbindungsstegen (14) vom Außenflansch (11) nach innen vorstehende Ansätze (17a) zum Anbringen von Elektronik tragenden Teilen ausgebildet sind.

12. Einrichtung nach den Ansprüchen 2 bis 4 mit einem verwendbaren Drehmomentsensor in Form eines monolithischen scheibenförmigen Aufnahmeteils (2), bestehend aus einem kreisringförmigen Innenflansch (20) mit ersten Krafteinleitungsstellen (22), aus einem kreisringförmigen Außenflansch (21) mit zweiten Krafteinleitungsstellen (23) und aus zwischen den beiden Flanschen (20, 21) ausgebildeten, radial verlaufenden Verbindungsstegen (24) jeweils mit mechanisch geschwächtem Abschnitt, an welchem druck- oder dehnungsempfindliche, elektrische Ausgangssignale generierende Messwertaufnehmer ($6_1$) vorgesehen sind, die nach dem Prinzip einer Wheatstone-Brücke jeweils zu Viertel-, Halb- oder Voll-Brücken in der Weise geschaltet sind, dass ein Drehmoment ermittelbar ist, wobei die mechanisch geschwächten Abschnitte als von der Ober- zur Unterseite der Verbindungsstege (24, 24') durchgehende Ausschnitte (25, 25') ausgebildet sind, und mindestens eine der senkrecht zur Oberfläche des Aufnahmeteils (2) ausgerichteten, in radialer Richtung verlaufenden Außenflächen (24a, 24a') der Verbindungsstege (24, 24') als plane Fläche ausgebildet ist, auf welcher entsprechend ausgerichtete Messwertaufnehmer ($6_1$) aufgebracht sind.

13. Drehmomentsensor nach Anspruch 12, wobei etwa radial ausgerichtete seitliche Wandungsbereiche (25c, 25'c) der Ausschnitte (25, 25') einen veränderlichen Querschnitt und die in radialer Richtung verlaufenden beiden Außenflächen (24a, 24'a) der Verbindungsstege (24, 24') etwa planparallele Flächen aufweisen, wodurch zwei Messspeichen gebildet sind, auf welche entsprechend ausgerichtete Messwertaufnehmer ($6_1$) aufgebracht sind.

## Claims

1. A method of determining a torque output by an electric motor used as a drive comprising an output annular gear assembly (91), wherein a dynamic motor torque ($M_{disturbance}$) in addition to an output torque ($M_{output}$) is sensed by a torque sensor for sensing the motor torque ($M_{sensor}$) stationary supported by the annular gear of the gear assembly (91) and from the motor torque sensed by means of the torque sensor the dynamic motor torque is substracted as a function of the precisely determinable change in speed of the motor shaft so that the output torque is given by

$$M_{output} = M_{sensor} - M_{disturbance}$$

2. A means for implementing the method as set forth in claim 1, wherein the means comprise: a gear assembly (95) with annular gear (98) at the output of an electric motor (90) containing a motor shaft (90a) used as the drive, a torque sensor (1;2) which with the annular gear (98) of the gear assembly (95) is supported by a stationary casing (92) provided surrounding the electric motor (90) and gear assembly (95), an encoder for determining changes in the speed of the electric motor (90) and a subtraction member and wherein on the motor shaft (90a) the encoder and the subtraction member are provided in which for determining the output torque ($M_{output}$) the precisely computable dynamic motor torque ($M_{disturbance}$) is subtracted from a motor torque ($M_{sensor}$) sensed by means of the torque sensor (1;2).

3. The means as set forth in claim 2, wherein the torque sensor (1;2) forms a unit with the annular gear (98) of a harmonic drive gear assembly (95) or of a planetary gear.

4. The means as set forth in claim 2, wherein conductors for communicating signals sensed by means of the torque sensor are brought out at the motor side.

5. The means as set forth in any of the claims 2 to 4 comprising a usable torque sensor in the form of a monolithic disk-shaped mount (1) comprising a circular ring-shaped inner flange (10) with first force application points (12), a circular ring-shaped outer flange (11) with second force application points (13) and radial connecting webs (14) configured between the two flanges (10, 11), each web provided with a mechanically weakened section, on which sensors (6) generating stress/strain-sensitive electrical output signals are provided, each circuited as quarter, half or full bridges in accordance with the Wheatstone bridge principle such that a torque can be sensed, wherein the mount (1) comprises a continuous, sectioned planar surface, and the mechanically weakened sections of the connecting webs (14) are configured as underside recesses (15) each covered by a thin membrane-type closure (15a), sensors (6) being applied to the planar surface of the membrane-type closures (15a).

6. A torque sensor as set forth in claim 5, wherein the mechanically weakened sections of the connecting webs (14) have a substantially U-shaped cross-section.

7. The torque sensor as set forth in claim 5 or claim 6, wherein the transition from the planar underside of the membrane-type closure (15a) of each recess (15) to the wall portions (15c) oriented roughly perpendicular to the planar underside is configured as a circumferential rounding (fillet) (15b).

**8.** The torque sensor as set forth in claim 7, wherein the roughly radially oriented, web-shaped lateral wall portions (15c) of the connecting webs (14) comprise differing wall thicknesses and thus elastic and less elastic, stiffer portions.

**9.** The torque sensor as set forth in claim 8, wherein the wall portions with elastic sections corresponding to a lesser wall thickness are located in transitions from the radially oriented sections to sections of the wall portions (15c) oriented along the flanges (10, 11) and the wall portions (15c) with less elastic and thus stiffer portions corresponding to a greater wall thickness.

**10.** The torque sensor as set forth in any of the claims 5 to 9, wherein the radial outer surface areas of the connecting webs (14) oriented perpendicular to the surface of the mount (1) are configured as planar surface areas mounting sensors ($6_1$).

**11.** The torque sensor as set forth in any of the claims 5 to 10, wherein lugs (17a) protruding from the outer flange (11) inwardly into notches (16) between two connecting webs (14) are configured for mounting parts carrying the electronics.

**12.** The means as set forth in any of the claims 2 to 4 comprising a usable torque sensor in the form of a monolithic disk-shaped mount (2) comprising a circular ring-shaped inner flange (20) with first force application points (22), a circular ring-shaped outer flange (21) with second force application points (23) and radial connecting webs (24) configured between the two flanges 20, 21), each web provided with a mechanically weakened section, sensors generating pressure or strain-sensitive electrical output signals, each circuited as quarter, half or full bridges in accordance with the Wheatstone bridge principle such that a torque can be sensed, wherein the mechanically weakened sections are configured as notches extending from the upper side to the underside of the connecting webs (24, 24'), and at least one of the radial outer surface areas (24a, 24a') of the connecting webs (14) oriented perpendicular to the surface of the mount (1) is configured as a planar surface area mounting correspondingly oriented sensors ($6_1$).

**13.** The torque sensor as set forth in claim 12, wherein roughly radially oriented lateral wall portions (25c, 25c') of the notches (25, 25') comprise a variable cross-section and the two radial outer surface areas (24a, 24'a) of the connecting webs (24) comprise roughly plan parallel surface areas, forming two sensor spokes mounting correspondingly oriented sensors ($6_1$).

## Revendications

**1.** Procédé pour déterminer un couple d'entraînement d'un moteur électrique utilisé comme dispositif d'entraînement et comportant un engrenage (91) disposé en aval de ce moteur et comportant une couronne à denture intérieure, selon lequel
un couple moteur dynamique ($M_{Störmoment}$) est mesuré, en plus d'un couple d'entraînement ($M_{Abtrieb}$), à l'aide d'un capteur de couple (1;2) servant à mesurer un couple moteur ($M_{Sensor}$), qui est supporté de façon fixe par la couronne à denture intérieure de l'engrenage (91), et
le couple moteur dynamique ($M_{Störmoment}$), qui dépend de variations déterminables de façon précise de la vitesse de rotation de l'arbre du moteur, est soustrait du couple moteur ($M_{Sensor}$) mesuré à l'aide du capteur de couple (1; 2), de sorte qu'on obtient le couple d'entraînement ($M_{Abtrieb}$) sous la forme :

$$M_{Abtrieb} = M_{Sensor} - M_{Störmoment}.$$

**2.** Dispositif pour la mise en oeuvre du procédé selon la revendication 1, dans lequel le dispositif comprend :

un engrenage (95) comportant une couronne à denture intérieure (98), qui est disposée en aval d'un moteur électrique (90) qui est utilisé comme dispositif d'entraînement et comporte un arbre (90a) du moteur, un capteur de couple (1;2) qui est supporté avec la couronne à denture intérieure (98) de l'engrenage (95) sur un boîtier fixe (92) prévu autour du moteur (90) et de l'engrenage (95), un codeur pour déterminer des variations de la vitesse de rotation du moteur (90) ainsi qu'un circuit soustracteur, et

dans lequel sur l'arbre (90a) du moteur sont prévus le codeur ainsi que le circuit soustracteur, dans lequel, pour la détermination du couple d'entraînement ($M_{Abtrieb}$), le couple moteur dynamique ($M_{Störmoment}$) pouvant être calculé de façon précise est soustrait d'un couple moteur ($M_{Sensor}$) mesuré au moyen du capteur de couple (1:2).

**3.** Dispositif selon la revendication 2, dans lequel le capteur de couple (1;2) forme une unité avec la couronne à denture intérieure (98) d'un engrenage Harmonic-Drive (95) ou d'un engrenage planétaire.

**4.** Dispositif selon la revendication 2, dans lequel des lignes pour la transmission de signaux, mesurés à l'aide du capteur de couple (1;2), s'étendent jusqu'au côté moteur.

**5.** Dispositif selon les revendications 2 à 4 comportant un capteur de couple utilisable sous la forme d'une partie de réception monolithique en forme de disque (1), constituée par une bride intérieure en forme d'anneau circulaire (10) comportant des premiers emplacements d'application de force (12), par une bride extérieure en forme d'anneau circulaire (11) comportant des seconds emplacements (13) d'application de force et par des barrettes de liaison radiales (14) qui sont formées entre les deux brides (10,11) et comportent chacune une partie affaiblie mécaniquement, sur laquelle sont prévus des enregistreurs (6) de valeurs de mesure qui sont sensibles à une pression ou à un allongement génèrant des signaux de sortie électriques et sont branchés selon le principe d'un pont de Wheatstone respectivement pour former un quart de pont, un demi-pont ou un pont complet de telle sorte qu'un couple peut être déterminé, dans lequel la partie de réception (1) comporte une face supérieure plane continue, divisée et que les parties affaiblies mécaniquement des barrettes de liaison (14) sont agencées sous la forme d'évidements (15) présents sur la face inférieure et comportant respectivement une terminaison mince (15a) en forme de membrane, des enregistreurs (6) de valeurs de mesure étant disposés sur la face supérieure étendue plane des terminaisons en forme de membranes (15a).

**6.** Capteur de couple selon la revendication 5, dans lequel une partie affaiblie mécaniquement des barrettes de liaison (14) possède une section transversale essentiellement en forme de U.

**7.** Capteur de couple selon la revendication 5 ou 6, dans lequel la jonction entre la surface inférieure étendue de la terminaison en forme de membrane (15a) de chaque évidement (15) avec des éléments de paroi (15c) orientés approximativement perpendiculairement à la face inférieure étendue, est agencée sous la forme d'un arrondi (évidement) périphérique (15b).

**8.** Capteur de couple selon la revendication 7, dans lequel les éléments latéraux de paroi (15a) en forme de barrettes, qui s'étendent approximativement dans la direction radiale, des barrettes de liaison (14) possèdent différentes épaisseurs de paroi et par conséquent des parties élastiques et des parties moins élastiques et plus rigides.

**9.** Capteur de couple selon la revendication 8, dans lequel les zones élastiques correspondant à des éléments de paroi possédant une épaisseur de paroi plus faible sont situées dans les jonctions reliant les parties s'étendant dans la direction radiale aux parties, qui s'étendent le long des brides (10,11), des éléments de paroi (15c), et qu'entre ces parties sont disposées les zones moins élastiques et donc plus rigides, qui correspondent à des éléments de paroi possédant une épaisseur de paroi plus importante.

**10.** Capteur de couple selon l'une des revendications 5 à 9, dans lequel les surfaces extérieures des barrettes de liaison (14), qui s'étendent dans la direction radiale et sont orientées perpendiculairement à la surface de la partie de réception (1), sont agencées sous la forme de surfaces planes, qui sont disposées sur le transmetteur ($6_1$) de valeurs de mesure.

**11.** Capteur de couple selon l'une des révendications 5 à 10, dans lequel des appendices saillants (17a), qui font saillie à l'intérieur et servent au montage de parties portant une unité électronique, sont formés dans des découpes (16) entre deux barrettes de liaison (14).

**12.** Capteur de couple selon les revendications 2 à 4, comportant un capteur de couple utilisable sous la forme d'une partie de réception monolithique en forme de disque (2), constituée par une bride intérieure en forme d'anneau circulaire (20) comportant des premiers emplacements d'application de force (22), par une bride extérieure en forme d'anneau circulaire (21) comportant des seconds emplacements (23) d'application de force et par des barrettes de liaison radiales (44) qui sont formées entre les deux brides (20,21) et comportent chacune une partie affaiblie mécaniquement, sur laquelle sont prévus des enregistreurs ($6_1$) de valeurs de mesure qui sont sensibles à une pression ou à un allongement et génèrent des signaux de sortie électriques et sont branchés selon le principe d'un pont de Wheatstone respectivement pour former un quart de pont, un demi-pont ou un pont complet de telle sorte qu'un couple peut être déterminé, et dans lequel les parties affaiblies mécaniquement sont agencées sous la forme de découpes (25,25') qui s'étendent de la face supérieure jusqu'à la face inférieure des barrettes de liaison (24, 24'), et au moins l'une des surfaces extérieures (24a,24a') des barrettes de liaison (24,24'), qui s'étendent dans une direction radiale et sont orientées perpendiculairement à la surface de la partie de réception (2), est agencée sous la forme d'une surface plane, sur laquelle sont disposés des enregistreurs ($6_1$) de valeurs de mesure, orientés de façon correspondante.

13. Capteur de couple selon la revendication 12, dans lequel des éléments de paroi latéraux (25c,25'c), qui sont orientés approximativement radialement, des découpes (25,25') possèdent une section transversale variable et les deux surfaces extérieures (24a,24'a), qui s'étendent dans la direction radiale, des barrettes de liaison (24,24') possèdent des surfaces approximativement planes et parallèles, en formant ainsi deux rayons de mesure, sur lesquels sont montés des enregistreurs ($6_1$) de valeurs de mesure orientés de façon correspondante.

# Fig.1

# Fig.2

$M_{Abtrieb}$

Fig.3a

Fig.3b

Fig.4

III

11

13

14

15c

15c

15b

15

6₁

6₁

12

10

III

Fig.5

13

11

14

15c

15

15a

12

10

# Fig.6a

# Fig.6b

Fig.7a

Fig.7b